# DEMANDE DE BREVET EUROPEEN

(11) **EP 0 945 562 A1**
(43) Date de publication de la demande: **29.09.1999**
(21) Numéro de dépôt: 99400710.2
(22) Date de dépôt: 23.03.1999
(51) Int. Cl.: E04F 15/02, E04F 15/022, E04F 13/08, B32B 3/14

(54) **Panneaux de revêtement, notamment de sol, et revêtement formé par de tels panneaux**

(30) Priorité: 25.03.1998 FR 9803696
(71) Demandeur: Novakovic, Miodrag, 78580 Maule (FR)
(72) Inventeur: Novakovic, Miodrag, 78580 Maule (FR)
(74) Mandataire: Berger, Helmut

(57) **Abrégé**

L'invention concerne un panneau de revêtement, notamment de sol.

Le panneau est caractérisé en ce qu'il comporte une pluralité de dalles (2) individuellement fixées sur une plaque de support (3) ayant des dimensions du panneau et juxtaposées sur celle-ci de façon qu'à l'état aligné dans un même plan, les dalles adjacentes (2) soient en contact mutuel par leurs chants (5), et en ce que la plaque de support (3) est en un matériau souple et compressible élastiquement dans le sens de son épaisseur.

L'invention est utilisable dans le domaine des revêtements de sol.

## Description

L'invention concerne un panneau de revêtement notamment de sol et un revêtement formé par de tels panneaux.

Les revêtements de ce type, qui sont connus, sous forme de parquet, de carrelage ou analogue nécessitent, soit une fixation, par exemple par collage, des panneaux qui les constituent sur la surface de pose qui a été préalablement soigneusement nivelée, soit une fixation de chacun des panneaux entre eux à l'aide d'un système de languettes et de rainures. Ces revêtements permettent de réaliser un sol homogène rajouté et parfait dans son horizontalité, mais ils ne permettent pas de corriger les défauts de planéité, d'où grincement et d'instabilité. Ils n'assurent pas non plus la démontabilité ni l'accessibilité à un endroit précis en dessous du revêtement, par exemple à un réseau de canalisations de fluide ou de câbles électriques, installé en dessous du revêtement, sans destruction de celui-ci

L'invention a pour but de proposer un panneau de revêtement et un revêtement qui pallient ces inconvénients.

Pour atteindre ce but, un panneau de revêtement selon l'invention est caractérisé en ce qu'il comporte une pluralité de dalles individuellement fixées sur une plaque de support ayant les dimensions du panneau et juxtaposées sur celle-ci de façon qu'à l'état aligné dans un même plan, les dalles adjacentes soient en contact mutuel par leurs chants et en ce que la plaque de support est en un matériau souple et compressible élastiquement dans le sens de son épaisseur.

Selon une caractéristique de l'invention une dalle précitée comporte une plaque supérieure, de revêtement, en un matériau de faible résistance à la flexion, et une plaque inférieure de support, rigide, en un matériau résistant à la flexion.

Le revêtement selon l'invention est caractérisé en ce qu'il est formé par juxtaposition contiguë de panneaux de revêtement selon l'invention, sur une surface de pose.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un seul mode de réalisation de l'invention et dans lesquels :
La figure 1 est une vue éclatée, en perspective, d'un panneau de revêtement selon la présente invention.
La figure 2 est une vue en perspective d'un panneau de revêtement selon l'invention à l'état plié.
La figure 3 est une vue en coupe d'un revêtement de sol selon l'invention, avec un panneau posé et un autre en train d'être posé.
La figure 4 est une vue similaire à la figure 2, mais montre une autre version de réalisation du panneau selon cette figure 2.
Comme on le voit sur les figures, un panneau de revêtement 1 selon l'invention présente une structure multicouche et comporte une pluralité de dalles 2 qui sont fixées, avantageusement par collage, individuellement, sur une plaque 3 en un matériau souple, compressible dans le sens de son épaisseur, et qui présente les mêmes dimensions que le panneau. Les différentes dalles 2 sont juxtaposées sur la plaque de support souple de façon que, à l'état d'alignement dans un même plan horizontal, les dalles adjacentes soient avantageusement en contact mutuel par leurs chants 5. Grâce à ce contact mutuel des dalles 2 sur la plaque de support commune souple 3 le panneau 1 peut constituer, à l'état horizontal, un ensemble rigide à l'égard des forces agissant sur sa face supérieure.

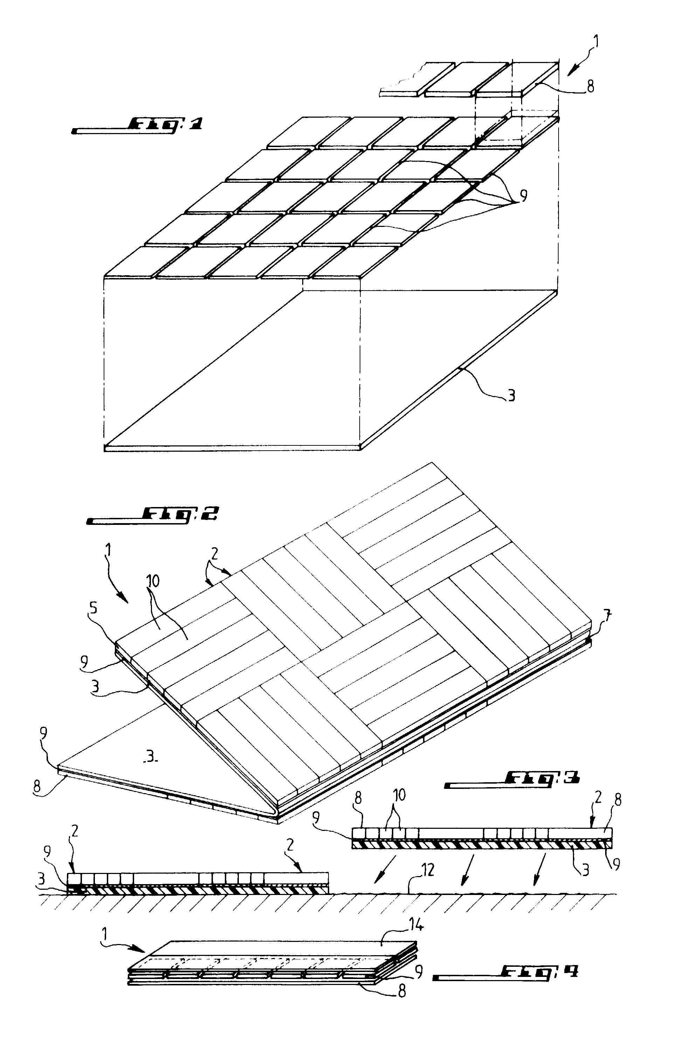

Par contre, étant donné que les dalles 2 sont alignées par leur bord, comme on le voit sur les figures 1 et 2, le panneau 1 peut être plié sous l'effet de forces agissant sur sa face inférieure. La figure 2 montre la plaque 1 à l'état plié obtenu par pliage de la plaque souple le long d'une ligne de pliage 7, qui s'étend au niveau des bords ou chants 5 alignés des dalles 2 juxtaposées dans le sens de cette ligne. Autrement dit, les dalles 2 sont articulées grâce à la plaque souple 3, qui constitue ainsi un moyen d'articulation.

Chaque dalle 2 se compose de deux plaques superposées, une plaque supérieure, de revêtement 8, rigide, en un matériau, le cas échéant, peu résistant à la flexion et une plaque inférieure de support 9 sur laquelle la plaque de revêtement 8 est fixée, par exemple par collage, et qui est réalisée en un matériau résistant à la flexion. Les différentes dalles 2 sont fixées sur la plaque de support souple 3 par leur plaque inférieure 9.

La plaque de revêtement supérieure 8 peut être une plaque de parquet, comme dans l'exemple représenté, formée par un certain nombre de lames de parquet parallèles 10, ou une plaque de carrelage, de pierres, de marbre ou analogue.

Les plaques de dalle inférieure 9 sont généralement en tôle ou en inox, mais pourraient également être en bois, en bois aggloméré ou autres matériaux composites rigide et résistant à la flexion. En effet, c'est grâce à la rigidité et la résistance des plaques 9 que les plaques de revêtement 8 sont protégées contre des forces de flexion et ainsi contre tous risques de cassure.

La plaque de support 3 souple, monopièce, est avantageusement en mousse, liège ou analogue. En plus de sa fonction de support des dalles 2, grâce à sa déformabilité dans le sens de son épaisseur, et en fonction de celle-ci, elle permet de corriger des défauts de planéité de la surface de pose des panneaux, indiqués en 12. La plaque 3 peut en outre servir de couche d'isolation acoustique ou thermique, selon le choix du matériau la constituant.

Comme l'illustre la figure 3, un revêtement de sol peut être réalisé par simple juxtaposition de panneaux 1, de façon contiguë sur la surface de pose 12, c'est-à-dire le sol. En raison de la souplesse des panneaux, cette surface n'a pas besoin de présenter une planéité parfaite dans la mesure où des irrégularités de cette surface seront compensées par les plaques souples compressibles 3 et la faculté des panneaux de se déformer sous l'effet de forces agissant d'en bas, grâce au montage articulé des dalles 2 sur la plaque 3.

Etant donné que les panneaux 1 sont simplement juxtaposés sur le sol 12, sans moyens de liaison mutuelle, telle que des moyens à languettes et rainures et sans être solidarisés du sol, ils peuvent être aisément enlevés. Ainsi les panneaux selon l'invention permettent d'accéder par exemple à un système de câbles électriques ou de conduites de fluide installé dans le sol ou une structure de sous-plancher.

La figure 4 montre une variante de réalisation d'un panneau selon l'invention. Dans cette version, le revêtement est réalisé sous forme d'une pluralité de lames juxtaposées 14 le cas échéant en un matériau souple et dont la longueur est égale à la longueur de l'arête du panneau 1 à laquelle cette lame est parallèle. Par contre, la couche de plaque rigide 9 est réalisée de la manière montrée sur les figures 1 à 3. Par conséquent plusieurs plaques rigides 9 sont juxtaposées sous une lame 14, dans la direction longitudinale de celle-ci. Comme auparavant, les plaques 9 sont posées sur une plaque 3 en un matériau souple. Ainsi les lignes de jonction de deux lames adjacentes 14 constituent des lignes d'articulation permettant un pliage du panneau, comme on le voit sur la figure 4.

Il ressort de la description des panneaux et des revêtements de sol réalisables par juxtaposition de tels panneaux, que l'invention procure de nombreux avantages tels qu'une parfaite faculté d'adaptation à des surfaces de pose, même irrégulières, une pose facile et rapide des panneaux ainsi que la possibilité d'un démontage aisé. Le revêtement selon l'invention est compatible avec d'autres revêtements souples tels qu'une moquette ou un vinyle en dalles plombantes. En effet, le revêtement selon l'invention peut être tout simplement posé sur ces revêtements. De façon générale, les panneaux démontables et par conséquent remplaçables peuvent être posés sur n'importe quel support existant tel que chape béton, sol carrelé, parquet, chape recouverte de moquette ou de revêtement plastique, plancher technique, plancher sur plots ou analogue. Malgré son caractère final rigide, le revêtement selon l'invention, grâce à son articulation, s'adapte à n'importe quel support quel que soit l'état de la planéité de celui-ci, car l'articulation des dalles le composant lui permet d'épouser parfaitement la surface du sol sur lequel il est posé. Les panneaux articulés selon l'invention peuvent être de dimensions et de formes variable selon les besoins des locaux destinés à en être équipés tels que des bureaux, locaux de présentation, professionnels et commerciaux ou logements privés.

## Revendications

1. Panneau de revêtement, notamment de sol, caractérisé en ce qu'il comporte une pluralité de dalles (2) individuellement fixées sur une plaque de support (3) ayant des dimensions du panneau et juxtaposées sur celle-ci de façon qu'à l'état aligné dans un même plan, les dalles adjacentes (2) soient en contact mutuel par leurs chants (5), que la plaque de support (3) est en un matériau souple et compressible élastiquement dans le sens de son épaisseur.

2. Panneau selon la revendication 1, caractérisé en ce que les dalles (2) sont fixées sur la plaque de support (3) de façon que leurs chants (5) soient alignés.

3. Panneau selon l'une des revendications 1 ou 2, caractérisé en ce qu'une dalle (2) comporte une plaque supérieure, de revêtement (8) et au moins une plaque inférieure de support (9), rigide, en un matériau résistant à la flexion et sur laquelle la plaque supérieure est fixée.

4. Panneau selon la revendication 3, caractérisé en ce qu'une plaque de revêtement (8) est une plaque de faible résistance à la flexion, telle qu'une plaque de parquet, de carrelage, de pierres, de marbre ou analogue.

5. Panneau selon l'une des revendications 3 ou 4, caractérisé en ce que la plaque inférieure de support (9) d'une dalle (2) est une plaque telle qu'une plaque en tôle, inox, bois, bois aggloméré ou matériau composite.

6. Panneau selon l'une des revendications précédentes, caractérisé en ce que la plaque de support (3) est une plaque avantageusement en mousse, liège ou analogue.

7. Panneau selon l'une des revendications précédentes, caractérisé en ce que les dalles (2) sont fixées sur la plaque de support souple (3) par collage ou analogue.

8. Panneau selon l'une des revendications précédentes, caractérisé en ce que le montage individuel des dalles (2) sur la plaque de support souple (3) et la compressibilité de celle-ci constitue des moyens de compensation d'irrégularités ou de défauts de planéité de la face (12) sur laquelle les panneaux (1) sont posés.

9. Panneau selon l'une des revendications 1 à 8, caractérisé en ce que la plaque de support est souple de façon à permettre un pliage du panneau au niveau des lignes d'alignement des chants des dalles.

10. Panneau selon l'une des revendications 1 à 9, caractérisé en ce qu'il constitue un ensemble rigide à l'état sensiblement plan, à l'égard des forces agissant sur la face supérieure du panneau.

11. Panneau selon l'une des revendications 3 à 11, caractérisé en ce qu'une dalle comporte une plaque supérieure de revêtement (8) disposée sur une plaque rigide (9).

12. Panneau selon l'une des revendications 3 à 10, caractérisé en ce qu'une dalle (14) est formée par une lame de revêtement s'étendant parallèlement à une arête du panneau (1) et dont la longueur correspond à la longueur de ladite arête et fixée sur plusieurs plaques (9) rigides juxtaposées dans le sens de la longueur de la lame sur la plaque de support (3), plusieurs lames étant juxtaposées sur la plaque de support (3).

13. Revêtement notamment de sol, caractérisé en ce qu'il est formé par juxtaposition contiguë de panneaux (1) selon l'une des revendications 1 à 12 sur une surface de pose (12).
